# EUROPÄISCHE PATENTANMELDUNG

(11) **EP 2 410 246 A2**
(43) Veröffentlichungstag der Anmeldung: **25.01.2012**
(21) Anmeldenummer: 11450094.5
(22) Anmeldetag: 20.07.2011
(51) Int. Cl.: F24D 3/14

(54) **Vorrichtung zum Klimatisieren eines Raumes**

(30) Priorität: 20.07.2010 AT 12212010
(71) Anmelder: KE KELIT Kunststoffwerk GmbH, 4020 Linz (AT)
(72) Erfinder: Egger, Karl, 4020 Linz (AT)
(74) Vertreter: Hübscher, Helmut

(57) **Zusammenfassung**

Die Erfindung betrifft eine Vorrichtung zum Klimatisieren eines Raumes mit wenigstens einem der Raumdecke (1) zugeordneten, von einem Wärmeträgerfluid durchströmten, insbesondere mit Abstand unterhalb der Decke (1) vorgesehen, Wärmetauscher (2). Um vorteilhafte Konstruktionsverhältnisse zu schaffen, wird vorgeschlagen, dass der Wärmetauscher (2) von einer Rohrschlange gebildet ist, die zumindest größtenteils strömungsoffen unterhalb der Decke (1) angeordnet und über Halteelemente (2) an der Decke (1) befestigt ist, wobei die Halteelemente (3) die Rohrschlange im Wesentlichen punktuell halten.

## Beschreibung

Die Erfindung betrifft eine Vorrichtung zum Klimatisieren eines Raumes mit wenigstens einem der Raumdecke zugeordneten, von einem Wärmeträgerfluid durchströmten, insbesondere mit Abstand unterhalb der Decke vorgesehen, Wärmetauscher.

Eine derartige bekannte Kühldecke (DE 20011751 U1) umfasst ein Deckenelement mit einer Mineralfaserplatte und einer Gipsplatte, in die eine Nut eingebracht ist, in die ein Temperiermittelschlauch eingelegt ist. Die Gipsplatte ist an der Vorder- und an ihrer Rückseite formschlüssig mit Mineralfaserplatten verbunden. Diese derart aufgebauten Wärmetauscherplatten werden unterhalb der Decke aufgehängt und von einem Wärmeträgerfluid durchströmt. Derartige Platten dienen zum Klimatisieren von Räumen, wobei ihnen gegenüber von auf Umluftsystemen basierenden Klimaanlagen der Vorteil zueigen ist, dass praktisch kein unangenehmer Luftzug entsteht und ein angenehmes zugfreies Raumklima geschaffen werden kann. Allerdings ist diesen vorbekannten Deckenelementen der Nachteil zueigen, dass sie verhältnismäßig aufwendig zu fertigen sind und dass diese an einer Baustelle nicht im gewünschten Maße an eventuelle bauliche Gegebenheiten angepasst werden können, da eine Veränderung der Deckenelementgröße vor Ort nicht möglich ist.

Weiters ist es bekannt in Decken selbst, insbesondere in Betondecken, Wärmetauscher in Form von Rohrschlagen einzubetonieren, womit bei einem einfachen Aufbau eine gute Anpassbarkeit an innenarchitektonische Gegebenheiten gewährleistet werden kann. Derartige Vorrichtungen haben allerdings den Nachteil, dass stets die gesamte Decke und gegebenenfalls auch der darüberliegende Fußboden mitgekühlt wird, was zusätzliche aufwendige Isolationsarbeiten am darüberliegenden Fußboden erforderlich macht. Zudem besteht nicht die einfache Möglichkeit im Nachhinein Gegenstände an der Decke zu befestigen bzw. aufzuhängen, da stets mit einer Beschädigung der Wärmetauscherrohre gerechnet werden muss.

Ausgehend von einem Stand der Technik der vorgeschilderten Art liegt der Erfindung die Aufgabe zugrunde, eine Vorrichtung zum Klimatisieren eines Raumes zu schaffen, die sich durch eine gute Anpassbarkeit an innenarchitektonische Gegebenheiten auszeichnet und die rasch und einfach aufgebaut werden können soll. Die erfindungsgemäße Vorrichtung soll insbesondere für eine Verwendung mit einer abgehängten Decke vorteilhaft geeignet sein.

Die Erfindung löst diese Aufgabe dadurch, dass der Wärmetauscher von einer Rohrschlange gebildet ist, die zumindest größtenteils strömungsoffen unterhalb der Decke angeordnet und über Halteelemente an der Decke befestigt ist, wobei die Halteelemente die Rohrschlange im Wesentlichen punktuell halten.

Erfindungsgemäß ist es vorgesehen, unterhalb der Decke Wärmetauscherrohre vorzusehen, die zumindest im Wesentlichen strömungsoffen unterhalb der Decke befestigt sind. Dazu sind die Wärmetauscherrohre lediglich punktuell gehalten, wodurch gewährleistet ist, dass zumindest nahezu die gesamte Mantelfläche der Wärmetauscherrohre zum Temperieren zur Verfügung steht. Die strömungsoffene Vorrichtung ist üblicherweise unterhalb Decke aber über einer ebenfalls strömungsoffenen abgehängten Decke angeordnet. In diesem Bereich werden üblicherweise auch diverse Versorgungsschächte, Kabelstränge und Lüftungsrohre angeordnet sein. Der wesentliche Vorteil dieser Anordnung liegt darin, dass die Wärmetauscherrohre direkt vor Ort an die baulichen Gegebenheiten angepasst und in der gewünschten Weise verlegt werden können.

Besonders einfache Konstruktionsverhältnisse ergeben sich, wenn Halteelemente von an der Deckenunterseite befestigten Halteschienen gebildet werden, welche die Rohrschlange punktuell in Ausnehmungen, vorzugsweise klemmend, aufnehmen. Zur Montage der Vorrichtung sind somit zuerst Halteschienen an der Deckenunterseite zu befestigen, wonach Wärmetauscherrohre an diesen Halteschienen angeschlagen werden können. Die Befestigung kann im einfachen Fall auch durch Verdrahten oder dgl. erfolgen.

Nach einer Ausgestaltungsform der Erfindung können die Halteelemente von an der Deckenunterseite befestigten Stäben eines Gitters gebildet werden, auf welches die Rohrschlange aufgelegt oder an dessen Unterseite die Rohrschlange punktuell befestigt ist. Das Gitter wird an die architektonischen Gegebenheiten angepasst und anschließend die Rohrschlange auf bzw. unterhalb dem Gitter in der gewünschten Weise, beispielsweise mäanderförmig, verlegt und mit den Stäben des Gitters vorzugsweise punktuell verbunden, um das Wärmetauscherrohr gegenüber dem Gitter lagefest halten zu können. Das Gitter kann dabei zudem als Traggitter für diverse andere Versorgungsleitungen, wie Kabelschächte, Lüftungsrohre oder dgl. dienen und erfüllt somit grundsätzliche Aufgaben.

Im einfachsten Fall ist die Rohrschlange auf den Gitterstäben aufgelegt, bzw. mit den Gitterstäben verdrahtet oder dgl. Eine besondere elegante Lösung zur Verbindung der Rohrschlange mit den Gitterstäben ergibt sich allerdings, wenn die Rohrschlange mittels Klemmen an den Gitterstäben befestigt ist, welche Klemmen einerseits an den Gitterstäben und anderseits an der Rohrschlange angreifen. Diese Klemmen können aus Metall oder Kunststoff gefertigt sein und werden vorzugsweise sowohl mit den Gitterstäben als auch mit der Rohrschlange verklipst.

Nach einer alternativen Ausgestaltungsform der Erfindung können die Halteelemente von an der Deckenunterseite oder von einer Tragplatte abragende, vorzugsweise eine Ringnut aufweisende, Halteansätze sein. Zur Montage sind die Tragplatten an der Deckenunterseite zu befestigen bzw. mit Halteansätze an der Deckenunterseite anzuordnen. Schließlich wird die Rohrschlange von diesen Halteansätzen gehalten bzw. zwischen zwei je benachbarten Halteansätzen klemmend gehalten oder in die Ringnut eingesetzt. Derartige Vorrichtungen eignen sich insbesondere zur Verwendung zwischen einer tragenden und einer abgehängten Decke. Um eine unnötige Abkühlung der Decke zu vermeiden, kann es von Vorteil sein, zwischen der Rohschlange und der tragenden Decke zusätzliche eine Isolierung anzuordnen. Diese Isolierung kann beispielsweise bereits der Tragplatte zugeordnet sein.

In einem einfachen Fall besteht die Isolierung beispielsweise aus einem Schaumstoff, an den die Rohrschlangen von unten angesetzt und mit einer Mehrzahl an Halteelementen an der Isolierung befestigt ist, welche Halteelemente die Rohrschlange u-förmig umfassen und mit der Isolierung verbunden, insbesondere verhakt, sind.

Eine besonders gleichmäßige Wärmeabgabe über die gesamte Wärmetauscheroberfläche hinweg lässt sich erzielen, wenn der Wärmetauscher von einer Rohrschlange gebildet ist, die bifilarartig und vorzugsweise spiralartig angeordnet ist, wobei unter bifilarartig insbesondere verstanden wird, dass Vor- und Rücklauf der Rohrschlange abwechselnd nebeneinander angeordnet sind. In diesem Zusammenhang bildet die eine Hälfte der Rohrschlange den Vorlauf und die andere Hälfte den Rücklauf der Rohrschlange. Dadurch ergibt sich zudem der Vorteil, dass die Anschlüsse des Wärmetauschers an den Vor- und Rücklauf eines Leitungsnetzes benachbart nebeneinander liegen, was bei der Installation erheblich von Vorteil ist.

Zwecks Leistungssteigerung kann dem von einer Rohrschlange gebildeten Wärmetauscher wenigstens ein die Wärmetauscheroberfläche vergrößernder Kühler zugeordnet sein. Zwecks Erzielung einfacher Konstruktions- und Montageverhältnisse empfiehlt es sich dabei, wenn der Kühler über zwei das Rohr klemmend greifende Ansätze an der Rohrschlange angreift. In einem einfachen Fall ist der Kühler beispielsweise ein Strangpressprofil mit einem bandförmigen Kühlergrundkörper von dem die Ansätze und gegebenfalls weitere Kühlrippen abragen.

In der Zeichnung ist die Erfindung anhand eines Ausführungsbeispiels schematisch dargestellt. Es zeigen
- Fig. 1: eine erfindungsgemäße Vorrichtung in Unteransicht,
- Fig. 2: eine Konstruktionsvariante der Vorrichtung in Unteransicht,
- Fig. 3 bis 5: Befestigungsvarianten zur Vorrichtung aus der Fig. 2 im teilgeschnittenen Querschnitt,
- Fig. 6: eine Befestigungsvariante zur Vorrichtung aus Fig. 1 im teilgeschnittenen Querschnitt,
- Fig. 7: eine weitere Variante der Erfindung in Unteransicht,
- Fig. 8: die Vorrichtung aus Fig. 7 im vergrößerten Maßstab im teilgeschnittenen Querschnitt,
- Fig. 9: eine Konstruktionsvariante der Vorrichtung aus Fig. 8,
- Fig. 10: eine weitere Konstruktionsvariante der Vorrichtung in Unteransicht, und
- Fig. 11: einen Ausschnitte der Konstruktionsvariante aus Fig. 10 im teilgeschnittenen Querschnitt.

Eine Vorrichtung zum Klimatisieren eines Raumes umfasst einen der Raumdecke 1 zugeordneten und einen Wärmetauscherfluid durchströmten Wärmetauscher 2 in Form einer Rohrschlange. Die Rohschlange ist in den dargestellten Ausführungsbeispielen stets mit Abstand unterhalb der Decke 1 angeordnet. Der von einer Rohrschlange gebildete Wärmetauscher 2 ist dabei zumindest größtenteils strömungsoffen unterhalb der Decke 1 angeordnet, kann also von der umgebenden Luft frei umströmt werden und ist über Halteelemente 3 an der Decke 1 befestigt, wobei die Halteelemente 3 die Rohrschlange im Wesentlichen punktuell halten, um die effektive Wärmetauscheroberfläche nicht übermäßig zu beschränken.

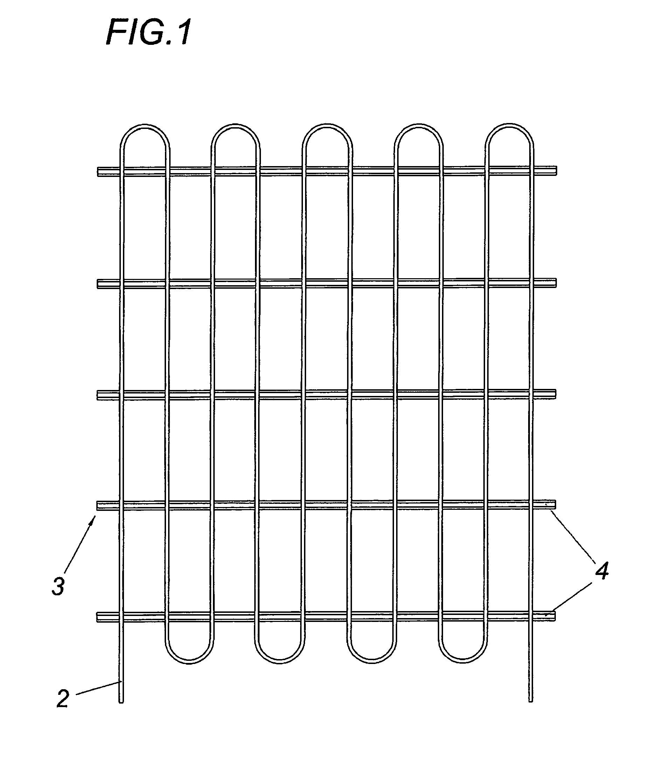

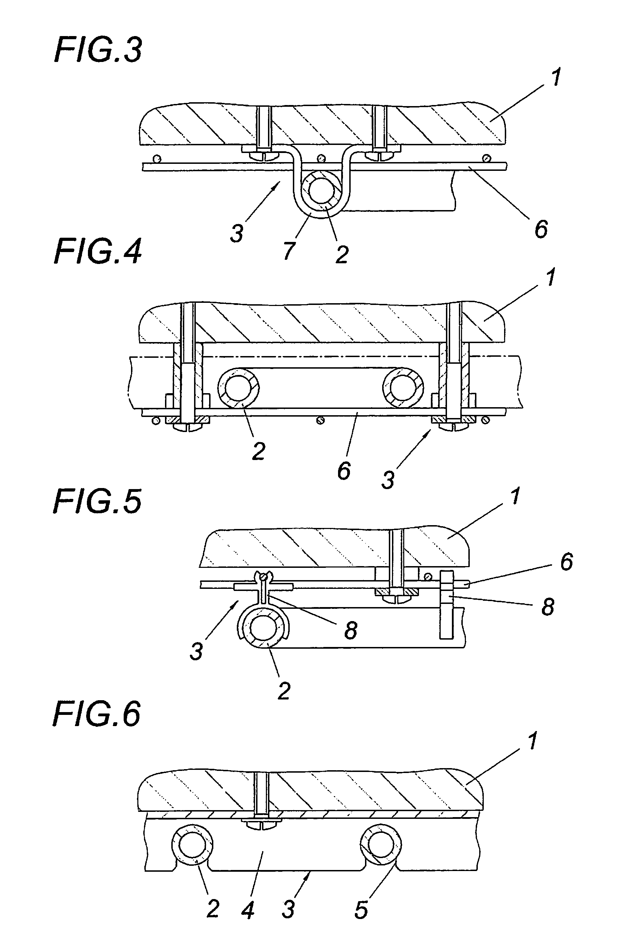

Im Ausführungsbeispiel nach den Fig. 1 und 6 sind die Halteelemente 3 von an der Deckenunterseite befestigten Halteschienen 4 gebildet, welche die Rohrschlange, den Wärmetauscher 2 punktuell in Ausnehmungen 5 klemmend aufnehmen. Zur Montage wird die Halteschiene 4 an der Deckenunterseite befestigt und wird anschließend die Rohrschlange in die Ausnehmungen 5 eingesetzt. Damit lässt sich die Vorrichtung rasch und umstandsfrei vor Ort an architektonische Gegebenheiten anpassen.

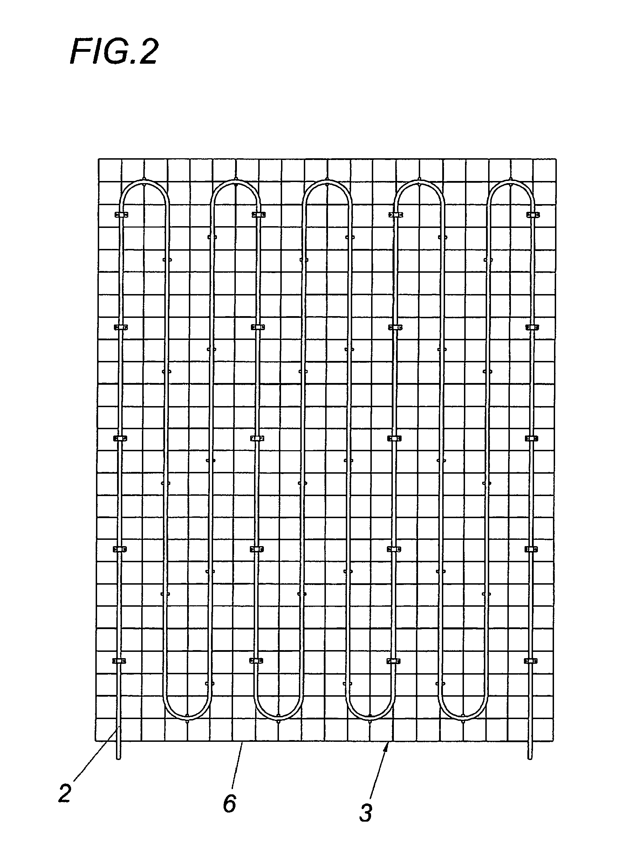

Im Ausführungsbeispiel nach den Fig. 2 und 3 bis 5 sind die Halteelemente 3 von an der Deckenunterseite befestigten Stäben eines Gitters 6 gebildet, auf welches Gitter 6 die Rohrschlange aufgelegt oder an dessen Unterseite die Rohrschlange punktuell befestigt ist. Gemäß Fig. 3 ist der Wärmetauscher 2 an der Gitterunterseite angeordnet und mit Haltebügeln 7 unter Zwischenlage des Gitters 6 an der Decke 1 befestigt. Nach dieser Variante kann im Bereich zwischen Gitter 6 und der Decke 1 gegebenenfalls zusätzlich diverse Einrichtungen, wie beispielsweise Kabelschächte, Lüftungsschächte oder dgl., vorgesehen werden. Im Ausführungsbeispiel nach der Fig. 4 ist der Wärmetauscher 2 zwischen der Decke 1 und dem Gitter 6 angeordnet, welches Gitter 6 mit der Decke 1 verschraubt ist. Zusätzlich kann der Wärmetauscher mit dem Gitter 6 beispielsweise durch Verdrahten oder dgl. lagefest gehalten werden. Im Ausführungsbeispiel nach Fig. 5 ist die Rohrschlange mit Klemmen 8 an den Gitterstäben befestigt, welche Klemmen 8 einerseits an den Gitterstäben und anderseits an der Rohrschlange angreifen. Die einzelnen Merkmale der vorgestellten Varianten können in beliebiger Weise miteinander kombiniert werden.

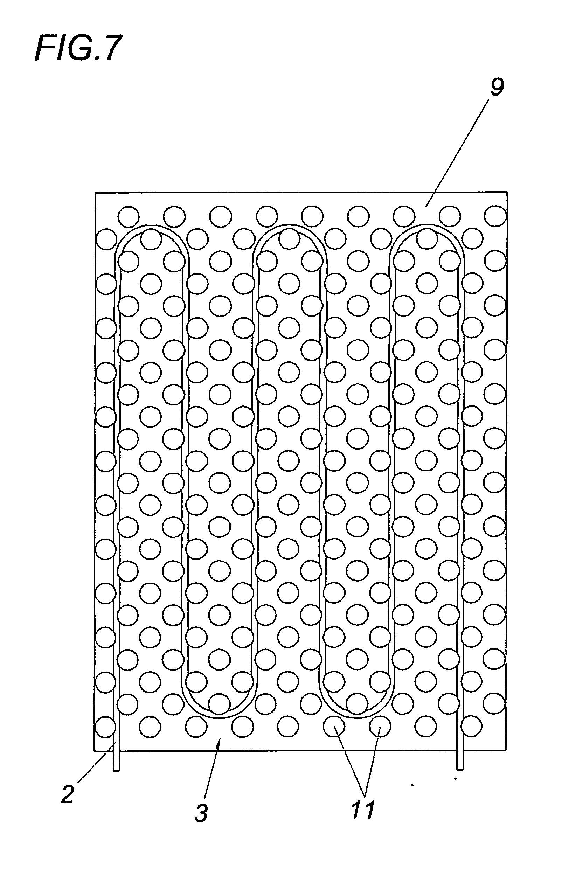

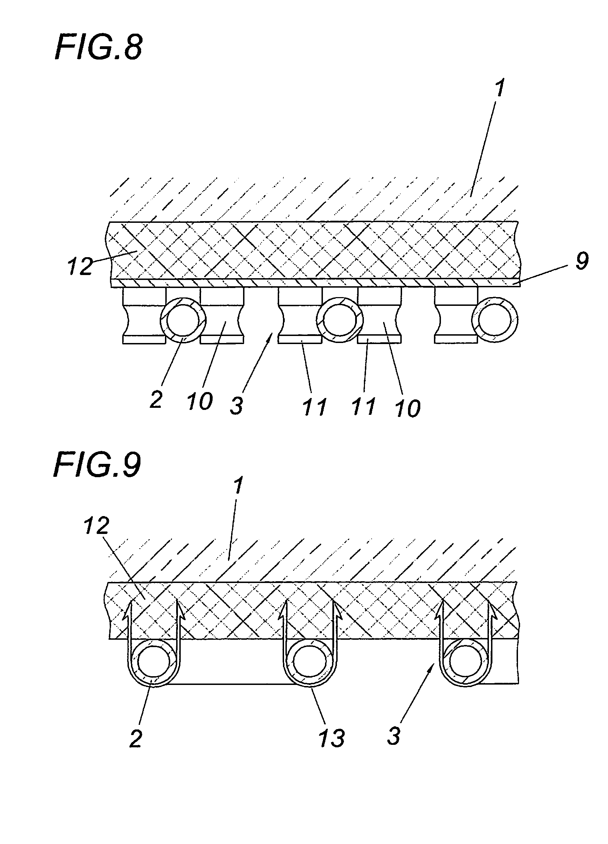

Im Ausführungsbeispiel nach den Fig. 7 und 8 sind die Halteelemente 3 von einer Tragplatte 9 abtragende, vorzugsweise eine Ringnut 10 aufweisende Halteansätze 11 und zwischen die Halteansätze 11 ist die Rohrschlagen derart eingelegt, dass sie stets in die Ringnut 10 benachbarter Ansätze 11 klemmend gehalten ist. Bei dieser Art der Montage ist dann ebenfalls im hohen Maße frei hinsichtlich der Anpassbarkeit an architektonische Gegebenheiten. Zusätzlich ist in Fig. 8 angedeutet, dass zwischen dem Wärmetauscher 2, also der Rohrschlange und der tragenden Decke 1, eine Isolierung 12 angeordnet ist. Eine derartige erfindungsgemäße Vorrichtung empfiehlt sich insbesondere für die Verwendung einer tragenden und einer abgehängten Decke, welche abgehängte Decke in diesem Fall ebenfalls strömungsoffen auszubilden ist.

Im Ausführungsbeispiel nach Fig. 9 ist die Tragplatte 9 bereits selbst aus einem isolierenden Kunststoff gefertigt und sind die Wärmetauscherrohre mit der Tragplatte 9 mit Haltebügeln 13 verhakt.

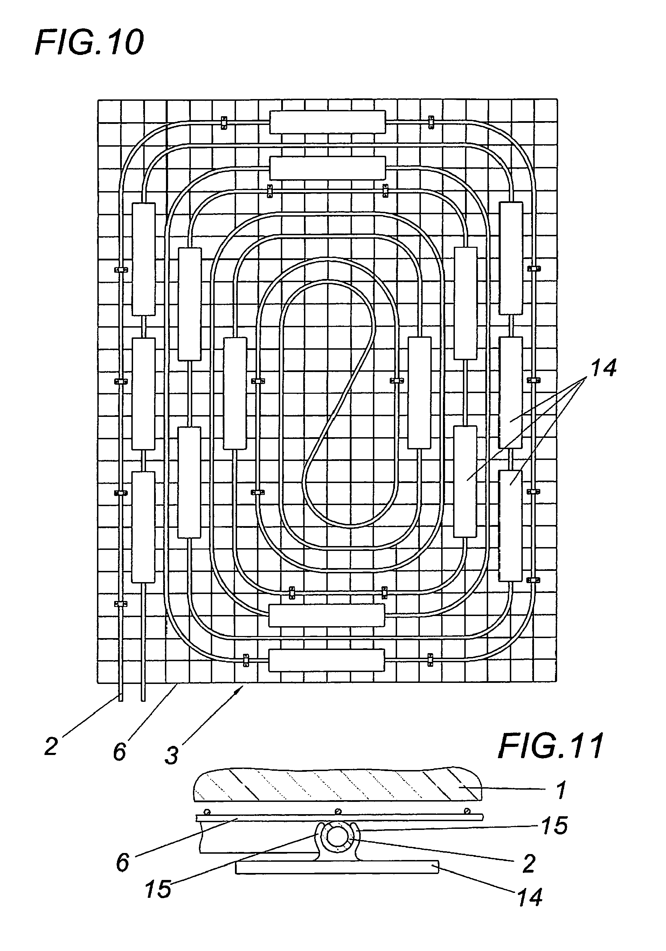

Gemäß dem Ausführungsbeispiel nach Fig. 10 ist der Wärmetauscher 2 von einer Rohrschlange gebildet, die bifilarartig und spiralartig auf einem Gitter 6 angeordnet ist, wobei Vor- und Rücklauf der Rohrschlange abwechselnd nebeneinander angeordnet sind. Dabei sind dem von einer Rohrschlange gebildeten Wärmetauscher 2 wenigstens mehrere die Wärmetauscheroberfläche vergrößernder Kühler 14 zugeordnet, die je über zwei das Rohr klemmend greifende Ansätze 15 an der Rohrschlange angreifen. Im dargestellten Beispiel ist der Kühler 14 ein Strangpressprofil mit einem bandförmigen Kühlergrundkörper von dem die Ansätze 15 abragen.

## Patentansprüche

1. Vorrichtung zum Klimatisieren eines Raumes mit wenigstens einem der Raumdecke (1) zugeordneten, von einem Wärmeträgerfluid durchströmten, insbesondere mit Abstand unterhalb der Decke (1) vorgesehen, Wärmetauscher (2), **dadurch gekennzeichnet, dass** der Wärmetauscher (2) von einer Rohrschlange gebildet ist, die zumindest größtenteils strömungsoffen unterhalb der Decke (1) angeordnet und über Halteelemente (3) an der Decke (1) befestigt ist, wobei die Halteelemente (3) die Rohrschlange im Wesentlichen punktuell halten.

2. Vorrichtung nach Anspruch 1, **dadurch gekennzeichnet, dass** die Halteelemente (3) von an der Deckenunterseite befestigten Halteschienen (4) gebildet werden, welche die Rohrschlange punktuell in Ausnehmungen (5), vorzugsweise klemmend, aufnehmen.

3. Vorrichtung nach Anspruch 1, **dadurch gekennzeichnet, dass** die Halteelemente (3) von an der Deckenunterseite befestigten Stäben eines Gitters (6) gebildet werden, auf welches die Rohrschlange aufgelegt oder an dessen Unterseite die Rohrschlange punktuell befestigt ist.

4. Vorrichtung nach Anspruch 3, **dadurch gekennzeichnet, dass** die Rohrschlange mittels Klemmen (8) an den Gitterstäben befestigt ist, welche Klemmen (8) einerseits an den Gitterstäben und anderseits an der Rohrschlange angreifen.

5. Vorrichtung nach Anspruch 1, **dadurch gekennzeichnet, dass** die Halteelemente (3) von an der Deckenunterseite oder von einer Tragplatte (9) abragende, vorzugsweise eine Ringnut (10) aufweisende, Halteansätze (11) sind.

6. Vorrichtung nach einem der Ansprüche 1 bis 5, **dadurch gekennzeichnet, dass** die Rohrschlange zwischen einer tragenden und einer abgehängten Decke (1) angeordnet ist.

7. Vorrichtung nach einem der Ansprüche 1 bis 6, **dadurch gekennzeichnet, dass** zwischen der Rohrschlange und der tragenden Decke (1) eine Isolierung (12) angeordnet ist.

8. Vorrichtung nach Anspruch 7, **dadurch gekennzeichnet, dass** die Rohrschlange mit einer Mehrzahl an Halteelementen (3) an der Isolierung (12) befestigt ist, welche Halteelemente (3) die Rohrschlange u-förmig umfassen und mit der Isolierung (12) verbunden, insbesondere verhakt sind.

9. Vorrichtung nach einem der Ansprüche 1 bis 8, **dadurch gekennzeichnet, dass** der Wärmetauscher (2) von einer Rohrschlange gebildet ist, die bifilarartig und vorzugsweise spiralartig angeordnet ist, wobei Vor- und Rücklauf der Rohrschlange abwechselnd nebeneinander angeordnet sind.

10. Vorrichtung nach einem der Ansprüche 1 bis 9, **dadurch gekennzeichnet, dass** dem von einer Rohrschlange gebildeten Wärmetauscher (2) wenigstens ein die Wärmetauscheroberfläche vergrößernder Kühler (14) zugeordnet ist.

11. Vorrichtung nach Anspruch 10, **dadurch gekennzeichnet, dass** der Kühler (14) über zwei das Rohr klemmend greifende Ansätze (15) an der Rohrschlage angreift.
